# EUROPÄISCHE PATENTSCHRIFT

(11) **EP 2 186 082 B1**
(45) Veröffentlichungstag und Bekanntmachung des Hinweises auf die Patenterteilung: **30.03.2016**
(21) Anmeldenummer: 08801292.7
(22) Anmeldetag: 03.09.2008
(51) Int. Cl.: G09G 3/34, F21V 8/00

(54) **DISPLAY-ANORDNUNG SOWIE VERFAHREN ZUR ANSTEUERUNG EINER DISPLAYEINHEIT ZUR KORREKTUR VON INHOMOGENITÄTEN DER LICHTABSTRAHLUNG**
DISPLAY ASSEMBLY AND METHOD OF CONTROLLING A DISPLAY UNIT IN ORDER TO CORRECT INHOMOGENEITIES IN THE EMITTED LIGHT
DISPOSITIF D'AFFICHAGE ET PROCÉDÉ DE COMMANDE D'UNE UNITÉ D'AFFICHAGE POUR LA CORRECTION DES DÉFAUTS D'HOMOGÉNÉITÉ DU RAYONNEMENT LUMINEUX

(30) Priorität: 05.09.2007 DE 102007042104
(43) Veröffentlichungstag der Anmeldung: 19.05.2010
(73) Patentinhaber: OSRAM Opto Semiconductors GmbH, 93055 Regensburg (DE)
(72) Erfinder: MUSCHAWECK, Julius, 82131 Gauting (DE)
(74) Vertreter: Epping - Hermann - Fischer
(86) Internationale Anmeldenummer: PCT/DE2008/001485
(87) Internationale Veröffentlichungsnummer: WO 2009/030222

(56) Entgegenhaltungen:
- EP-A- 1 890 280
- US-A1- 2001 017 774
- US-A1- 2006 022 935
- US-A1- 2006 187 182
- US-A1- 2007 262 947
- US-A1- 2008 186 272
- US-B1- 6 241 358
- SEETZEN HELGE ET AL: "Self-calibrating wide color gamut high dynamic range display" IS&T/SPIE'S ANNUAL SYMPOSIUM ON ELECTRONIC IMAGING, XX, XX, Bd. 6492, 12. Februar 2007 (2007-02-12), Seiten 64920Z/1-9, XP002454790

## Beschreibung

Die Erfindung betrifft eine Display-Anordnung mit einer Hinterleuchtungseinheit und einer Displayeinheit, die derart angeordnet sind, dass im Betrieb der Display-Anordnung von der Hinterleuchtungseinheit abgestrahltes Licht auf die Rückseite der Displayeinheit trifft.

Derartige Display-Anordnungen betreffen übliche Ausgestaltungen von Computer-Flachbildschirmen oder LCD-Fernsehern. Während die Displayeinheit angesteuert wird, um für die einzelnen Pixel zu bestimmen, ob und wie Licht der verschiedenen Farben abgestrahlt wird, sorgt die Hinterleuchtungseinheit für die Erzeugung des Lichts, welches durch die Displayeinheit in Richtung eines Betrachters abgestrahlt wird.

Zudem betrifft die Erfindung Verfahren zur Ansteuerung einer Displayeinheit einer Displayanordnung und zur Bereitstellung von Parametern einer Helligkeitsverteilung einer Hinterleuchtungseinheit.

Zwar weisen Flachbildschirme bzw. LCD-Fernseher eine gegenüber herkömmlichen Monitoren bzw. Fernsehern sehr kompakte Ausgestaltung auf, es ist aber dennoch ein Bestreben in der technischen Entwicklung, Display-Anordnungen noch flacher auszugestalten. Dies ist besonders relevant bei Flachbildschirmen für mobile Anwendungen in Notebooks oder Laptops, da dort die Dicke des gesamten Geräts wesentlich von der Dicke der Display-Anordnung mitbestimmt wird.

Um dünne Display-Anordnungen bereitstellen zu können, ist es bekannt, nicht eine Direkthinterleuchtung der Displayeinheit vorzunehmen, sondern die Licht erzeugenden Komponenten seitlich anzuordnen und über Lichtleiter das Licht in den gewünschten Bereichen austreten zu lassen. Bei besonders großen Flachbildschirmen besteht jedoch das Problem, dass derartig große Lichtleiter aus herstellungstechnischen Gründen nicht bereitgestellt werden können. Zwar könnte man lange, schmale Lichtleiter nebeneinander anordnen, dies würde jedoch zu keinem befriedigenden Ergebnis führen, da an den Grenzbereichen zwischen den einzelnen Lichtleitern Streifen auf dem Bild erkennbar wären.

Die Druckschriften Seetzen, Helge et al., "Self-calibrating wide color gamut high dynamic range display", IS&T/SPIE'S ANNUAL SYMPOSIUM ON ELECTRONIC IMAGING, Vol. 6492, pp. 64920Z/1-9; XP002454790, February 12, 2007 und US 2006/0187182 A1 beschreiben Verfahren zur Ansteuerung von Display-Anordnungen.

Die Druckschrift US 2001/0017774 A1 beschreibt eine Hinterleuchtungsvorrichtung und die Druckschrift US 2006/022935 A1 ein LCD-Display.

Es ist Aufgabe der Erfindung, eine Display-Anordnung anzugeben, die sehr flach ist und trotzdem eine streifenfreie Wiedergabe eines Bildes ermöglicht. Außerdem soll ein entsprechend geeignetes Verfahren zur Ansteuerung einer Displayeinheit angegeben werden.

Diese Aufgabe wird durch eine Display-Anordnung der eingangs genannten Art gelöst, die dadurch gekennzeichnet ist, dass die Hinterleuchtungseinheit mindestens zwei nebeneinander liegende Lichtleiterelemente aufweist, wobei die Hinterleuchtungseinheit derart ausgestaltet ist, dass in dem Grenzbereich der Lichtleiterelemente Licht einer größeren Helligkeit abgestrahlt wird als außerhalb der Grenzbereiche, zwischen der Hinterleuchtungseinheit und der Displayeinheit eine Diffusorschicht angeordnet ist, und eine Steuereinheit vorgesehen und derart eingerichtet ist, eine größere Helligkeit in den Grenzbereichen durch eine angepasste Ansteuerung der Displayeinheit zu kompensieren.

Bezüglich des Verfahrens wird die Aufgabe durch ein Verfahren nach Anspruch 9 gelöst.

Die Lehre der Erfindung besteht also darin, trotz potenzieller Streifenentstehung nebeneinander liegende Lichtleiterelemente zu verwenden, um die Hinterleuchtung der Displayeinheit bereitzustellen. Nach der Lehre der Erfindung wirken nun zwei Elemente zusammen: einerseits wird bewusst in den Grenzbereichen zweier Lichtleiterelemente Licht einer größeren Helligkeit abgestrahlt und andererseits ist vorgesehen, das "zu viel" abgestrahlte Licht durch eine entsprechende Ansteuerung der Displayeinheit zu blockieren, was im Folgenden auch als "Dimmen" bezeichnet wird. Dadurch, dass nur eine zu große Helligkeit in relativ kleinen Bereichen gedimmt werden muss, ist eine effiziente Arbeitsweise einer erfindungsgemäß gestalteten Display-Anordnung möglich. Durch eine Diffusorschicht zwischen der Hinterleuchtungseinheit und der Displayeinheit wird ermöglicht, dass sich die erhöhte Helligkeit in den Grenzbereichen verwaschen auf der Rückseite der Displayeinheit zeigt und so verhältnismäßig einfach zu kompensieren ist, ohne dass das menschliche Auge eine Streifenbildung auf der Displayeinheit wahrnimmt.

In einer Weiterbildung der Erfindung wird zwischen der Diffusorschicht und der Displayeinheit ein Luftspalt ausgebildet, der zusätzlich dazu beiträgt, den Helligkeitsüberschuss in den Grenzbereichen zu "verschleifen", also für kontinuierliche Übergänge zu sorgen.

Bei der Display-Anordnung wird eine erhöhte Helligkeit in den Grenzbereichen dadurch begünstigt, dass im Überlappungsbereich nebeneinander liegender Lichtleiterelemente Auskoppelstrukturen vorgesehen werden, die eine Lichtauskopplung begünstigen. In Lichtleitern kann Licht nur unter bestimmten Voraussetzungen austreten, wenn nämlich eine von den Brechungsindizes des Lichtleitermaterials und des Umgebungsmaterials abhängende Winkelbedingung erfüllt ist. Durch eine besondere Ausgestaltung des Grenzbereichs zwischen dem Lichtleiter und der Umgebung lässt sich daher die Menge des austretenden Lichts beeinflussen.

Weiterhin ist es vorteilhaft, die Dicke der Lichtleiterelemente ausgehend von den Lichteinkoppelstellen, an denen die LED angeordnet sind, zu reduzieren. Dies sorgt für eine gleichmäßige Lichtauskopplung über der gesamten Fläche der einzelnen Lichtleiterelemente.

In einer vorteilhaften Ausgestaltung einer erfindungsgemäßen Display-Anordnung weist diese eine Dicke kleiner als 15 mm, vorzugsweise kleiner als 10 mm auf.

Der Einsatz des erfindungsgemäßen Konzepts ist insbesondere bei Display-Anordnungen mit einer Diagonale größer als 60 cm besonders vorteilhaft.

In einer günstigen Ausgestaltung der erfindungsgemäßen Display-Anordnung ist die Steuereinheit dazu eingerichtet, eine durch ein Videosignal bestimmte Helligkeit eines anzuzeigenden Bildes durch eine vorbestimmte Helligkeitsverteilung der Hinterleuchtungseinheit zu dividieren und dadurch ein Ansteuersignal für die Displayeinheit zu erzeugen.

Weitere vorteilhafte Ausgestaltungen der Erfindung sind in den Unteransprüchen angegeben.

Die Erfindung wird nachfolgend anhand eines Ausführungsbeispiels näher erläutert. Es zeigt:
- Figur 1: eine schematische Querschnittsdarstellung eines Ausführungsbeispiels einer erfindungsgemäßen Display-Anordnung,
- Figur 2A: ein Diagramm mit einer beispielhaften Helligkeitsverteilung,
- Figur 2B: ein weiteres Diagramm mit einer beispielhaften Helligkeitsverteilung,
- Figur 3: ein Ablaufdiagramm eines ersten Verfahrens zur Erzeugung eines Ansteuersignals,
- Figur 4: ein Ablaufdiagramm eines zweiten Verfahrens zur Erzeugung eines Ansteuersignals und
- Figur 5: eine Draufsicht auf eine erfindungsgemäße Display-Anordnung.

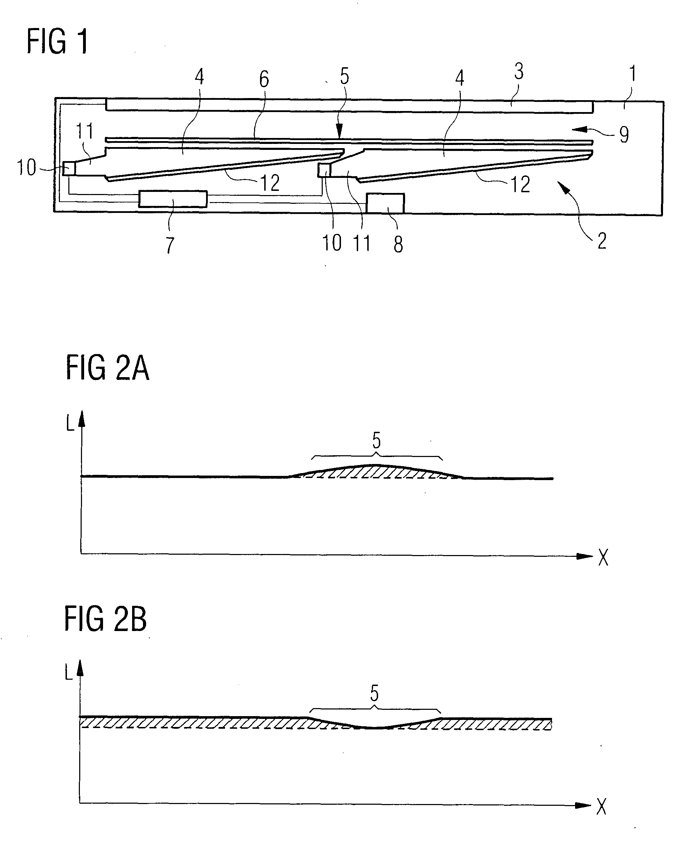

Die Figur 1 zeigt eine Display-Anordnung 1 mit einer Displayeinheit 3 auf der Vorderseite sowie einer im Gehäuseinneren angeordneten Hinterleuchtungseinheit 2. Die Hinterleuchtungseinheit 2 weist im vorliegenden Ausführungsbeispiel zwei Lichtleiterelemente 4 auf, die sich in einem Grenzbereich 5 überlappen. Details zur Ausgestaltung von Lichtleiterelementen 4 sind beispielsweise aus der deutschen Gebrauchsmusterschrift DE 202005001507 U1 bekannt, auf die insoweit verwiesen wird, anstatt die entsprechenden Details in der vorliegenden Anmeldung zu wiederholen.

Auf der der Displayeinheit 3 zugewandten Vorderseite der Lichtleiterelemente ist eine Diffusorfolie 6 vorgesehen. Zwischen der Diffusorfolie 6 und der Displayeinheit 3 ist ein Luftspalt 9 gebildet. Die Diffusorfolie 6 bewirkt in Verbindung mit dem Luftspalt 9, dass im Grenzbereich 5 zwar eine erhöhte Helligkeit des von der Hinterleuchtungseinheit 2 abgestrahlten Lichts vorliegt, dieses jedoch keine scharfen Konturen hat, sondern es zu einem weichen Übergang zu dem Bereich erhöhter Helligkeit kommt. Untechnisch ausgedrückt wird die Helligkeitserhöhung "verschliffen".

Die Lichtleiterelemente 4 haben eine keilförmige Gestalt, wobei an der dicken Seite des Keils eine Lichteinkoppelfläche 11 gebildet ist, an der jeweils eine Leuchtdiode, kurz LED 10 angeordnet ist. Das von der LED 10 eingestrahlte Licht wird an den Grenzflächen der Lichtleiterelemente 4 teilweise reflektiert, teilweise nach oben in Richtung der Displayeinheit 3 ausgekoppelt. In einer vorteilhaften Ausgestaltung ist auf der Rückseite der Lichtleiterelemente eine zusätzliche reflektierende Fläche 12 vorgesehen, um so Lichtverluste zu vermeiden. Außerdem wird durch die reflektierende Folie verhindert, dass Licht einer LED 10 von der Rückseite her in ein darüber liegendes Lichtleiterelement 4 eindringt. Dadurch würde es in diesem Bereich zu einer unbeabsichtigt starken Überhöhung der Helligkeit austretenden Lichts kommen.

Die keilförmige Formgebung trägt dazu bei, dass über der gesamten Fläche der Lichtleiterelemente 4 Licht einer weitgehend gleichen Helligkeit abgegeben wird. Der Lichtstrom verringert sich ausgehend von der LED 10 kontinuierlich entlang des Keils, da ein Teil des Licht nach oben austritt. Bezogen auf den Querschnitt eines Lichtleiterelements 4 bleibt der Lichtstrom jedoch in diesem Ausführungsbeispiel der Erfindung annähernd gleich.

Eine weitere Maßnahme zur Steuerung der Lichtaustrittsmenge besteht darin, dass im Überlappungsbereich 5 nebeneinander liegender Lichtleiterelemente Auskoppelstrukturen vorgesehen werden, die eine Lichtauskopplung begünstigen. In Lichtleitern kann Licht nur unter bestimmten Voraussetzungen austreten, wenn nämlich eine unter anderem von den Brechungsindizes des Lichtleitermaterials und des Umgebungsmaterials abhängende Winkelbedingung erfüllt ist. Durch eine besondere Ausgestaltung des Grenzbereichs zwischen dem Lichtleiter und der Umgebung lässt sich daher die Menge des austretenden Lichts beeinflussen. Geeignete Maßnahmen sind beispielsweise Auskoppelprismen, Aufrauungen oder Diffusoren in dem Lichtleiterelement oder an seiner der Oberfläche. Die Maßnahmen bezüglich der Oberflächengestaltung des Lichtleiterelements 4 bewirken, dass der Winkel, in dem ein Lichtstrahl auf die Grenzfläche des Lichtleiterelements auftrifft, bei gleicher Richtung des Lichtstrahls je nach Stelle innerhalb des Lichtleiterelements unterschiedlich ist. Diffusoren bewirken, dass die Richtung des Lichtstrahls beeinflusst wird und der Auftreffwinkel so nicht mehr allein von der Geometrie des Lichtleiterelements abhängt. Somit wird die Wahrscheinlichkeit erhöht, dass ein Lichtstrahl in einem solchen Winkel auf die Grenzfläche auftrifft, der ein Austreten erlaubt.

In dem gezeigten vorteilhaften Ausführungsbeispiel der Display-Anordnung wird eine erhöhte Helligkeit in den Grenzbereichen dadurch erzeugt, dass die Auskoppelstrukturen derart ausgestaltet sind, dass sie in den Grenzbereichen 5 mehr Licht auskoppeln lassen.

Im Grenzbereich 5, in dem sich die beiden beispielhaft dargestellten Lichtleiterelemente 4 überlappen, ist die Helligkeit des abgestrahlten Lichts der Hinterleuchtungseinheit 2 also aufgrund der beschriebenen Maßnahmen größer als in den Bereichen, in denen sich die Lichtleiterelemente 4 nicht überlappen. Es kommt zu einer Helligkeitsverteilung über der Hinterleuchtungseinheit 2, wie in Figur 2A dargestellt ist. In dem Grenzbereich zwischen den beiden Lichtleiterelementen 4 tritt eine Helligkeitserhöhung auf, während in den Bereichen außerhalb des Grenzbereichs eine gleichmäßige Helligkeit herrscht.

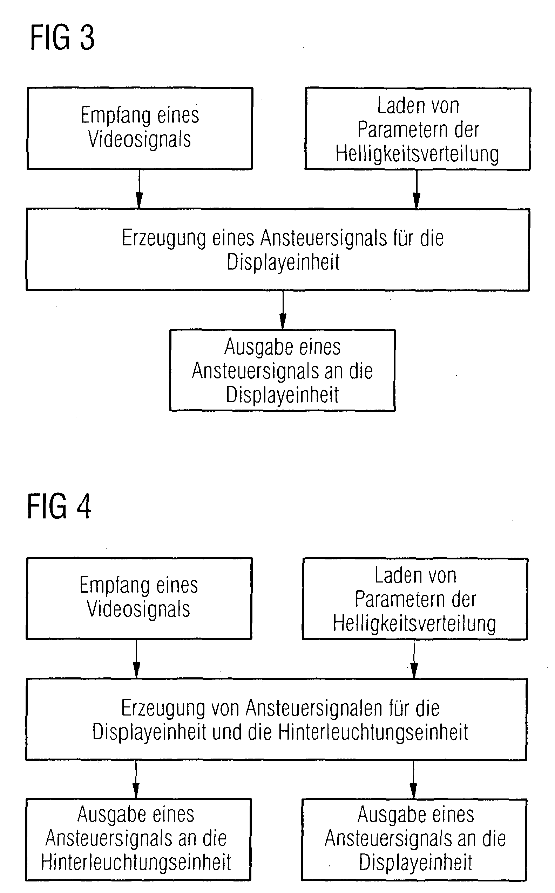

Die in der Figur 2A gezeigte Helligkeitsverteilung ist in diesem Ausführungsbeispiel konstruktionsbedingt und daher vorbestimmt. Die vorbekannte bzw. vorbestimmte Helligkeitsverteilung kann als Funktion oder als Wertetabelle in einer Steuereinheit 7 abgelegt sein, die die Ansteuerung der Displayeinheit 3 übernimmt. Wird nun über eine Schnittstelle 8 ein Videosignal erhalten, welches Bildinformationen enthält, die auf der Displayeinheit 3 dargestellt werden sollen, so wird dieses Videosignal in ein Ansteuersignal aufbereitet, wie in Figur 3 dargestellt ist. Bei der Aufbereitung wird die bekannte Helligkeitsverteilung der Hinterleuchtungseinheit 2 berücksichtigt und die Displayeinheit 3 im Grenzbereich 5 der Hinterleuchtungseinheit 2 entsprechend dunkler gesteuert. Dadurch wird die erhöhte Helligkeit der Hinterleuchtungseinheit 2 im Grenzbereich 5 kompensiert. Technisch gesehen ergibt eine Multiplikation des Ansteuersignals für die Displayeinheit 3 mit der Helligkeitsverteilung der Hinterleuchtungseinheit 2 diejenige Helligkeit, die aufgrund des Videosignals, welches an der Schnittstelle 8 empfangen wird, dargestellt werden soll. Aufgrund dieses Zusammenhangs lässt sich das angepasste Ansteuersignal in verhältnismäßig einfacher Weise aus dem Videosignal berechnen.

Die Steuereinheit 7 kann zusätzlich mit den LED 10 verbunden sein, um die Helligkeit der Hinterleuchtungseinheit 2 zu beeinflussen. In diesem Fall müsste, wie in Figur 4 dargestellt ist, die Ansteuerung der LED bei der Erzeugung des Ansteuersignals für die Displayeinheit (3) berücksichtigt werden, da die Helligkeitsverteilung sowohl von konstruktionsbedingten Faktoren als auch der Ansteuerung der LED abhängt.

Aus Sicht der Energieeffizienz ist die erfindungsgemäße Ausgestaltung mit einer Erhöhung der Helligkeit im Grenzbereich 5 von besonderem Vorteil, da nur verhältnismäßig wenig Licht der Hinterleuchtungseinheit 2 durch die Displayeinheit 3 geblockt werden muss. Es handelt sich, Bezug nehmend auf Figur 2A, um den schraffiert dargestellten Bereich des Diagramms, der über dem konstanten Helligkeitslevel liegt, d. h. der Bereich im Grenzbereich 5. Wären die Lichtleiterelemente 4 so ausgestaltet, dass im Grenzbereich 5 ein dunklerer Bereich läge, so müsste wesentlich mehr Licht ausgefiltert werden, nämlich der in Figur 2B über der gestrichelten Linie liegende Bereich. Die Erhöhung der Helligkeit im Grenzbereich 5 bringt daher eine Verbesserung der Energieeffizienz mit sich.

Als Diffusorschicht wird vorzugsweise eine Diffusorfolie 6 eingesetzt, da diese auch großflächig hergestellt werden kann, sodass sie mehrere Lichtleiterelemente 4 überdeckt und somit auch die Kanten der Lichtleiterelemente 4 im Grenzbereich 5 überdeckt.

Die Verwendung von Leuchtdioden zur Erzeugung des Lichts der Hinterleuchtungseinheit 2 ist deswegen besonders vorteilhaft, weil Leuchtdioden sehr klein sind. Die Anordnung der Leuchtdioden 11 im Überlappungsbereich zweier Lichtleiterelemente 4 hat sich als vorteilhaft erwiesen, da so eine gleichmäßige Helligkeitsverteilung über der Oberfläche eines Lichtleiterelements 4 möglich ist. Insbesondere wenn die Leuchtdioden 10 eine definierte Richtcharakteristik haben, lässt sich der Strahlengang innerhalb der Lichtleiterelemente 4 verhältnismäßig exakt berechnen und das Lichtleiterelement 4 entsprechend gestalten.

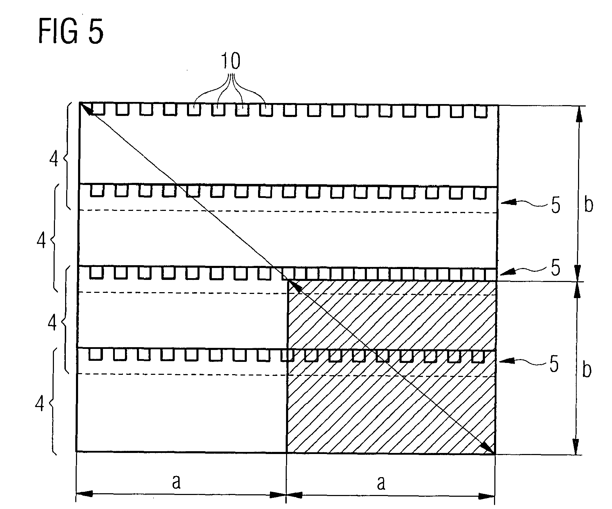

Der Einsatz streifenförmiger Lichtleiterelemente 4 ermöglich bei besonders großen Displays eine hohe maximale Helligkeit der Hinterleuchtung, da thermische Problem vermieden werden. Dies wird an einem Beispiel deutlich, welches anhand der Figur 5 erläutert wird. Ausgehend von einem Display mit den Abmessungen a * b, führt eine Verdopplung der Displaydiagonalen zur den Abmessungen 2a*2b, also zu einer vierfachen Fläche. Soll die Helligkeit der Hinterleuchtung gleich bleiben, muss die vierfache Anzahl an LED eingesetzt werden. Bei einem einstückigen Lichtleiter kann aber nur an den Seiten Licht eingekoppelt werden. Die Umfangfläche verdoppelt sich aber nur, so dass die Dichte der LED entlang des Umfangs zusätzlich verdoppelt werden muss. Folglich verdoppelt sich auch die auf den Umfang bezogene Wärmeentwicklung, was zu erheblichen thermischen Problem führt.

Bei Einsatz der beschriebenen streifenförmigen Lichtleiterelementen ergibt sich für jedes Lichtleiterlement 4 eine doppelte Länge, es können bei gleichem Abstand der LED also doppelt so viele LED eingesetzt werden. Da gleichzeitig die doppelte Anzahl an Lichtleiterelementen 4 eingesetzt wird, ergibt sich ein vierfache Anzahl an LED, ohne dass die thermische Belastung steigt. So können auch sehr große Displays realisiert werden, ohne dass aufwendige Kühlungsmaßnahmen erforderlich sind.

In einer vorteilhaften, erweiterten Ausgestaltung einer erfindungsgemäßen Display-Anordnung wird nicht nur weißes Licht zur Hinterleuchtung verwendet, sondern es werden so genannte RGB-Leuchtdioden, die Licht unterschiedlicher Farbe erzeugen können, oder auch mehrere LED jeweils unterschiedlicher Farbe eingesetzt. In Abhängigkeit der darzustellenden Bildinformationen kann die Hinterleuchtung in unterschiedlichen Farben erfolgen, was zu einer erhöhten Farbsättigung und zu einem erhöhten Kontrast des wahrgenommenen Bildes führt. Dazu ist die Steuereinheit 7 eingerichtet, ein Steuersignal für die Displayeinheit 3 nicht nur bezüglich der Helligkeit gegenüber dem Videosignal zu modifizieren, sondern auch bezüglich der Farbe. Gleichzeitig wird die Hinterleuchtungseinheit 2 so angesteuert, dass sich für einen Betrachter wieder der richtige Farbeindruck entsteht.

In einer weiter verfeinerten Ausgestaltung der erfindungsgemäßen Display-Anordnung werden mehrere Lichtleiterelemente 4 in einer Matrix angeordnet, um so ein verwaschenes Bild des für einen Betrachter darzustellenden Bildes durch die Hinterleuchtungseinheit 2 darstellen zu können. Beispielsweise könnten zwölf Lichtleiterelemente 4 eingesetzt werden, die in einer 4x3-Matrix angeordnet werden. Während also die Hinterleuchtungseinheit 2 ein grobes Bild auf die Rückseite der Displayeinheit 3 projiziert, ist die Displayeinheit 3 selber für eine Nuancierung der dargestellten Farben zuständig und ermöglicht die Darstellung eines scharfen, kontrastreichen Bildes. Ein zusätzlicher Vorteil ist dabei, dass die Energieeffizienz weiter verbessert, d. h. der Energieverbrauch gesenkt wird.

Mit der erfindungsgemäßen Displayanordnung lässt sich in besonders einfacher Weise eine zusätzliche Maßnahme zur Verbesserung der wahrgenommenen Bildschärfe bei bewegten Bildern umsetzen, die als "Scanning Backlight" oder "Blinking Backlight" bezeichnet wird. Bei dieser Technik wird die normalerweise kontinuierlich leuchtende Displayhinterleuchtung durch ein sequenziell getaktete Hinterleuchtung ersetzt. Dabei wird für Pixelbereiche des Displays die Hinterleuchtung für den Bruchteil einer Vollbilddauer ausgeschaltet. Aufgrund der Wahrnehmungseigenschaften des menschlichen Auges wird ein so erzeugtes, bewegtes Bild schärfer wahrgenommen. Bei einer Hinterleuchtungseinheit, die gemäß der Erfindung in Streifen aufgeteilt ist, wobei pro Streifen eine separate Reihe LED zum Einsatz kommt, lässt sich ein durchlaufender, heller Streifen besonders einfach realisieren. Die Frequenz, mit der der Streifen durchläuft, ist vorzugsweise auf die Bildwiederholfrequenz des Displays abgestimmt.

Weitere Ausführungen erfindungsgemäßer Display-Anordnungen liegen im Ermessen des Fachmanns und sind von der Erfindung umfasst.

## Patentansprüche

1. Display-Anordnung (1) mit
- einer Hinterleuchtungseinheit (2) und
- einer Displayeinheit (3),
die derart angeordnet sind, dass im Betrieb der Display-Anordnung (1) von der Hinterleuchtungseinheit (2) abgestrahltes Licht auf die Rückseite der Displayeinheit (3) trifft, wobei
- zwischen der Hinterleuchtungseinheit (2) und der Displayeinheit (3) eine Diffusorschicht (6) angeordnet ist,
- die Hinterleuchtungseinheit (2) mindestens zwei nebeneinander liegende Lichtleiterelemente (4) aufweist, wobei die Hinterleuchtungseinheit (2) derart ausgestaltet ist, dass in dem Grenzbereich (5) der Lichtleiterelemente (4) Licht einer größeren Helligkeit abgestrahlt wird als außerhalb der Grenzbereiche (5),
**dadurch gekennzeichnet, dass**
- sich zwei nebeneinander liegende Lichtleiterelemente (4) im Grenzbereich (5) überlappen,
- als Lichtquellen Leuchtdioden (10) vorgesehen sind, um Licht seitlich in die Lichtleiterelemente (4) einzukoppeln,
- im Überlappungsbereich nebeneinander liegender Lichtleiterelemente (4) Auskoppelstrukturen vorgesehen sind, die eine Lichtauskopplung begünstigen, und
- eine Steuereinheit (7) vorgesehen und derart eingerichtet ist, eine größere Helligkeit in den Grenzbereichen (5) durch eine angepasste Ansteuerung der Displayeinheit (3) zu kompensieren.

2. Display-Anordnung nach Anspruch 1,
**dadurch gekennzeichnet, dass** zwischen der Diffusorschicht (6) und der Displayeinheit (3) ein Luftspalt (9) ausgebildet ist.

3. Display-Anordnung nach Anspruch 1 oder 2,
**dadurch gekennzeichnet, dass** die Diffusorschicht (6) durch eine Diffusorfolie gebildet ist.

4. Display-Anordnung nach einem der obigen Ansprüche, **dadurch gekennzeichnet, dass** die Leuchtdioden (10) im Bereich der Überlappung der Lichtleiterelemente (4) vorgesehen sind.

5. Display-Anordnung nach Anspruch 1,
**dadurch gekennzeichnet, dass** die Dicke der Lichtleiterelemente (4) ausgehend von den Lichteinkoppelstellen (11), an denen die Leuchtdioden (10) angeordnet sind, abnimmt.

6. Display-Anordnung nach Anspruch 1,
**dadurch gekennzeichnet, dass** eine der Display-Anordnung (3) zugewandte Vorderseite der Lichtleiterelemente (4) im Wesentlichen parallel zur Rückseite der Display-Anordnung (3) verläuft und die Rückseite der Lichtleiterelemente (4) der jeweiligen Lichteinkoppelfläche zugeneigt ist.

7. Display-Anordnung nach einem der Ansprüche 1 bis 6,
**dadurch gekennzeichnet, dass** die Dicke der Display-Anordnung (1) kleiner als 15 mm, vorzugsweise kleiner als 10 mm ist.

8. Display-Anordnung nach einem der Ansprüche 1 bis 7,
**dadurch gekennzeichnet, dass** die Displayeinheit (3) eine Diagonale größer als 60 cm aufweist.

9. Verfahren zur Ansteuerung einer Displayeinheit (3) einer Displayanordnung (1), nach einem der vorhergehenden Ansprüche, mit den Schritten:
- Empfang eines Videosignals,
- Verarbeitung des Videosignals unter Verwendung einer vorbekannten Helligkeitsverteilung des von der Hinterleuchtungseinheit abgestrahlten Lichts,
- Ansteuerung der Displayeinheit (3) derart, dass Helligkeitsunterschiede der Hinterleuchtungseinheit kompensiert werden.

10. Verfahren nach Anspruch 9,
**dadurch gekennzeichnet, dass** das Videosignal durch eine vorbestimmte Helligkeitsverteilung der Hinterleuchtungseinheit (2) dividiert wird, um dadurch ein bezüglich der Helligkeit angepasstes Ansteuersignal für die Displayeinheit (3) zu erzeugen.

11. Verfahren zur Bereitstellung von Parametern einer Helligkeitsverteilung zur Verwendung in einer Displayanordnung (1) nach einem der Ansprüche 1 bis 8 oder einem Verfahren nach einem der Ansprüche 9 bis 10,
**gekennzeichnet durch** folgende Schritte:
- Ansteuern einer Displayeinheit (3) zur Darstellung einer homogenen Helligkeit ohne Berücksichtigung der Helligkeitsverteilung einer Hinterleuchtungseinheit (2),
- Messen der Helligkeitsverteilung des von der Displayeinheit (3) angestrahlten Lichts,
- Speicherung von Parametern der gemessenen Helligkeitsverteilung in der Displayanordnung (1).

12. Verfahren nach Anspruch 11,
**dadurch gekennzeichnet, dass** die Displayeinheit (3) zur Darstellung einer homogenen Farbe angesteuert wird.

## Claims

1. Display assembly (1) comprising
- a backlight unit (2) and
- a display unit (3),
which are arranged in such a way that during the operation of the display assembly (1) light emitted by the backlight unit (2) impinges on the rear side of the display unit (3), wherein
- a diffuser layer (6) is arranged between the backlight unit (2) and the display unit (3),
- the backlight unit (2) has at least two optical waveguide elements (4) lying alongside one another, the backlight unit (2) being configured in such a way that light is emitted with a greater brightness in the boundary region (5) of the optical waveguide elements (4) than outside the boundary regions (5),
**characterized in that**
two optical waveguide elements (4) lying alongside one another overlap in the boundary region (5),
- light-emitting diodes (10) are provided as light sources in order to couple light laterally into the optical waveguide elements (4),
- coupling-out structures provided in the overlap region of optical waveguide elements (4) lying alongside one another, said coupling-outstructures promoting the coupling-out of light, and
- a control unit (7) is provided and designed to compensate for a greater brightness in the boundary regions (5) by means of an adapted driving of the display unit (3).

2. Display assembly according to Claim 1,
**characterized in that** an air gap (9) is formed between the diffuser layer (6) and the display unit (3).

3. Display assembly according to Claim 1 or 2,
**characterized in that** the diffuser layer (6) is formed by a diffuser film.

4. Display assembly according to any of the claims,
**characterized in that** the light-emitting diodes (10) are provided in the region where the optical waveguide elements (4) overlap.

5. Display assembly according to Claim 1,
**characterized in that** the thickness of the optical waveguide elements (4) decreases proceeding from the light coupling-in locations (11), at which the light-emitting diodes (10) are arranged.

6. Display assembly according to Claim 1,
**characterized in that** a front side of the optical waveguide elements (4), which faces the display assembly (3), runs substantially parallel to the rear side of the display assembly (3) and the rear side of the optical waveguide elements (4) is inclined toward the respective light coupling-in area.

7. Display assembly according to any of Claims 1 to 6,
**characterized in that** the thickness of the display assembly (1) is less than 15 mm, preferably less than 10 mm.

8. Display assembly according to any of Claims 1 to 7,
**characterized in that** the display unit (3) has a diagonal greater than 60 cm.

9. Method for driving a display unit (3) of a display assembly (1) according to any of the preceding claims, comprising the following steps:
- receiving a video signal,
- processing the video signal using a previously known brightness distribution of the light emitted by the backlight unit,
- driving the display unit (3) in such a way that brightness differences of the backlight unit are compensated for.

10. Method according to Claim 9,
**characterized in that** the video signal is divided by a predetermined brightness distribution of the backlight unit (2) in order thereby to generate a drive signal adapted with regard to the brightness for the display unit (3).

11. Method for providing parameters of a brightness distribution for use in a display assembly (1) according to any of Claims 1 to 8 or a method according to either of Claims 9 to 10,
**characterized by** the following steps:
- driving a display unit (3) for representing a homogeneous brightness without taking account of the brightness distribution of a backlight unit (2),
- measuring the brightness distribution of the light emitted by the display unit (3),
- storing parameters of the measured brightness distribution in the display assembly (1).

12. Method according to Claim 11,
**characterized in that** the display unit (3) is driven for representing a homogeneous color.

## Revendications

1. Arrangement d'affichage (1) comprenant
- une unité de rétroéclairage (2) et
- une unité d'affichage (3),
qui sont disposées de telle sorte que durant le fonctionnement de l'arrangement d'affichage (1), la lumière émise par l'unité de rétroéclairage (2) vient frapper la face arrière de l'unité d'affichage (3),
- une couche de diffusion (6) étant disposée entre l'unité de rétroéclairage (2) et l'unité d'affichage (3),
- l'unité de rétroéclairage (2) possédant au moins deux éléments de guidage de lumière (4) juxtaposés, l'unité de rétroéclairage (2) étant configurée de telle sorte que la lumière émise dans la zone limite (5) des éléments de guidage de lumière (4) présente une luminosité supérieure à celle émise en-dehors des zones limites (5),
**caractérisé en ce que**
- deux éléments de guidage de lumière (4) juxtaposés se chevauchent dans la zone limite (5),
- les sources de lumière présentes sont des diodes électroluminescentes (10) destinées à injecter la lumière latéralement dans les éléments de guidage de lumière (4),
- des structures de découplage sont présentes dans la zone de chevauchement des éléments de guidage de lumière (4) juxtaposés, lesquelles favorisent un découplage de la lumière, et
- il existe une unité de commande (7) qui est conçue pour compenser une luminosité plus élevée dans les zones limites (5) par une excitation adaptée de l'unité d'affichage (3).

2. Arrangement d'affichage selon la revendication 1, **caractérisé en ce qu'**un jeu d'aération (9) est formé entre la couche de diffusion (6) et l'unité d'affichage (3).

3. Arrangement d'affichage selon la revendication 1 ou 2, **caractérisé en ce que** la couche de diffusion (6) est formée par un film diffuseur.

4. Arrangement d'affichage selon l'une des revendications précédentes, **caractérisé en ce que** les diodes électroluminescentes (10) se trouvent dans la zone du chevauchement des éléments de guidage de lumière (4).

5. Arrangement d'affichage selon la revendication 1, **caractérisé en ce que** l'épaisseur des éléments de guidage de lumière (4) diminue à partir des points d'injection de la lumière (11) auxquels sont disposées les diodes électroluminescentes (10).

6. Arrangement d'affichage selon la revendication 1, **caractérisé en ce qu'**une face avant de l'élément de guidage de lumière (4) qui fait face à l'arrangement d'affichage (3) s'étend sensiblement parallèlement à la face arrière de l'arrangement d'affichage (3), et la face arrière de l'élément de guidage de lumière (4) est inclinée en direction de la surface d'injection de lumière correspondante.

7. Arrangement d'affichage selon l'une des revendications 1 à 6, **caractérisé en ce que** l'épaisseur de l'arrangement d'affichage (1) est inférieure à 15 mm, de préférence inférieure à 10 mm.

8. Arrangement d'affichage selon l'une des revendications 1 à 7, **caractérisé en ce que** l'unité d'affichage (3) présente une diagonale supérieure à 60 cm.

9. Procédé d'excitation d'une unité d'affichage (3) d'un arrangement d'affichage (1) selon l'une des revendications précédentes, comprenant les étapes suivantes :
- réception d'un signal vidéo,
- traitement du signal vidéo en utilisant une distribution de luminosité préalablement connue de la lumière émise par l'unité de rétroéclairage,
- excitation de l'unité d'affichage (3) de telle sorte que les différences de luminosité de l'unité de rétroéclairage soient compensées.

10. Procédé selon la revendication 9, **caractérisé en ce que** le signal vidéo est divisé par une distribution de luminosité prédéfinie de l'unité de rétroéclairage (2) afin de générer ainsi un signal d'excitation de l'unité d'affichage (3) qui est adapté du point de vue de la luminosité.

11. Procédé de fourniture de paramètres d'une distribution de luminosité pour une utilisation dans un arrangement d'affichage (1) selon l'une des revendications 1 à 8 ou un procédé selon l'une des revendications 9 à 10, **caractérisé par** les étapes suivantes :
- excitation d'une unité d'affichage (3) en vue de représenter une luminosité homogène sans tenir compte de la distribution de luminosité d'une unité de rétroéclairage (2),
- mesure de la distribution de luminosité de la lumière émise par l'unité d'affichage (3),
- mémorisation des paramètres de la distribution de luminosité mesurée dans l'arrangement d'affichage (1).

12. Procédé selon la revendication 11, **caractérisé en ce que** l'unité d'affichage (3) est excitée en vue d'afficher une couleur homogène.
